# EUROPEAN PATENT SPECIFICATION

(11) **EP 3 548 255 B1**
(45) Date of publication and mention of the grant of the patent: **09.09.2020**
(21) Application number: 17817153.4
(22) Date of filing: 28.11.2017
(51) Int. Cl.: B29C 63/00, B29C 65/20, E06B 3/96, B29L 31/00

(54) **PROCESS FOR THE SEALING OF PLASTIC PROFILED ELEMENTS**
VERFAHREN ZUR VERSCHWEISSUNG VON PROFILELEMENTEN AUS KUNSTSTOFF
PROCÉDÉ DE SOUDAGE D'ÉLÉMENTS PROFILÉS EN MATIÈRE PLASTIQUE

(30) Priority: 01.12.2016 IT 201600122321
(43) Date of publication of application: 09.10.2019
(73) Proprietor: Graf Synergy S.r.l., 41015 Nonantola (MO) (IT)
(72) Inventor: VACCARI, Andrea, 41015 Nonantola (MO) (IT)
(74) Representative: Luppi, Emanuele
(86) International application number: PCT/IB2017/057450
(87) International publication number: WO 2018/100492

(56) References cited:
- WO-A1-2015/063658

## Description

### Technical Field

The present invention relates to a process for the sealing of plastic profiled elements.

### Background Art

In the state of the art, plastic profiled elements such as PVC or the like, mostly used as window and door frames, are sealed together by melting the respective head surfaces in order to create a frame structure applicable to doors or windows.

In particular, melting takes place by heating the portions to be connected by means of appropriate electric heating-element plates and then pressing the heated portions against each other to facilitate melting.

Generally, the heated portions are the head ending parts of the profiled elements, suitably cut at 45° to define, for example, a right-angled portion of a respective window or door frame.

This method is implemented by sealing machines equipped with respective retaining devices for the profiled elements, which are moveable close to each other to bring into contact the heated ending parts to be sealed.

These machines are also equipped with finishing systems, adapted to remove the sealing bead or seam that is formed during the melting of the two profiled elements.

In fact, at the joining line of the two profiled elements (surfaces cut at 45°), the portion of excess molten material escapes and forms a bead protruding from the visible surface of the profiled elements.

For this reason, in order to give the finished window and door frames an appreciable aesthetic appearance, the sealed profiled elements undergo a bead removal process.

However, the well-known sealing devices briefly described above have major drawbacks mainly related to the formation of the above-mentioned sealing bead. In fact, it should be considered that the sealing area of the plastic profiled elements is not completely homogeneous and therefore, in order to make the profiled elements regular, a lot of material is melted with the consequent formation of an abundant bead, and therefore abundant waste material that has to be removed.

Furthermore, the finishing operations adapted to remove the bead and clean the sealing area have a significant impact on the overall production time of the window and door frames.

It should be noted that for each window or door frame sealing operation, the profiled elements have to be subsequently machined.

Furthermore, the removal of this bead is considerably complicated for radiated profiled elements.

To this must be added that the machines used for the above-mentioned finishing operations are bulky, complex and particularly expensive.

This means that additional production costs and time are required, given the presence of additional cumbersome equipment and tools.

Patent document WO 2013/132406 A1 shows a method and a device that allow overcoming the aforementioned drawbacks.

The system illustrated in WO 2013/132406 A1, in fact, allows sealing profiled elements without forming any sealing bead but still remains subject to upgrading.

In this respect, the fact is underlined that the plastic profiled elements used to manufacture window and door frames usually have a surface coated with an adhesive film, applied for protective purposes and as a support for information, data and logos.

Such film extends over the substantial totality of the profiled element as far as the area to be sealed and, during sealing, ends up melting together with the plastic of the profiled element itself.

When sealing is performed with the device illustrated in WO 2013/132406 A1, however, the melted film material remains inconveniently incorporated in the sealed areas, thus creating an inadmissible unsightly effect.

The use of the system shown in WO 2013/132406 A1, therefore, requires the user to remove the film manually before sealing, at least in the area to be sealed, in order to prevent it from melting together with the profiled elements.

This operation, besides being inconvenient and impractical for the user, obviously entails additional production costs and times.

Patent document WO 2015/063658 A1 describes a machine for stripping the films which cover the profiled elements prior to the sealing step of the head surfaces of the profiled elements themselves, preventing such operation having to be carried out by the operators responsible for securing the profiled elements by means of retaining means.

Such machine is provided with at least one stripping roller provided with a surface with a high friction coefficient, or made of a material able to grip the films and therefore chosen according to the characteristics of the films themselves.

Such machine has the main drawback tied to the structural complexity of the machine itself due to the presence of the stripping rollers and relative movement means.

Another drawback is tied to the production times necessary for stripping the profiled elements before sealing the head surfaces of the profiled elements themselves, as well as to the machine downtime in the sealing operations due to possible breakdowns of the stripping rollers.

### Description of the Invention

The main aim of the present invention is to devise a process for the sealing of plastic profiled elements which allows simplifying and facilitating the stripping operations of the visible profiled elements of the sealing of the head surfaces. Within this aim, one object of the present invention is to devise a process for the sealing of plastic profiled elements which allows speeding up the stripping and therefore sealing operations of the profiled elements.

A further object of the present invention is to devise a process for the sealing of plastic profiled elements which allows overcoming the aforementioned drawbacks of the prior art within the scope of a simple, rational, easy, efficient to use and cost-effective solution.

The aforementioned objects are achieved by the present process for the sealing of plastic profiled elements having the characteristics of claim 1.

### Brief Description of the Drawings

Other characteristics and advantages of the present invention will become more evident from the description of a preferred, but not exclusive embodiment of a process for the sealing of plastic profiled elements, illustrated by way of an indicative, but non-limiting example, in the attached drawings in which:
Figure 1 is an axonometric view of a machine for the sealing of plastic profiled elements;

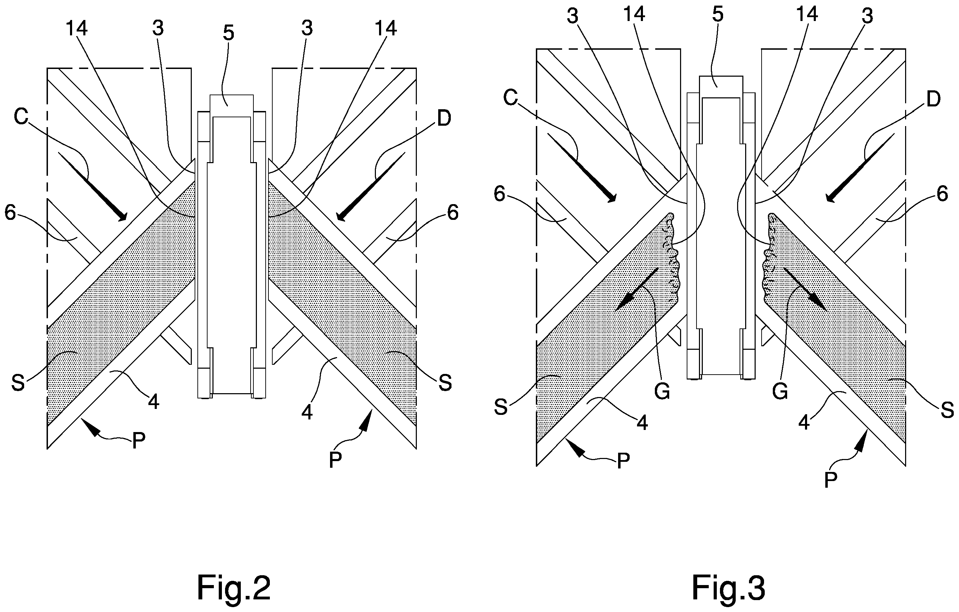

Figures 2 and 3 are top views illustrating the process for the sealing of plastic profiled elements according to the invention.

### Embodiments of the Invention

The process for the sealing of plastic profiled elements comprises:
- one step of supply of a machinery 1 for the sealing of plastic profiled elements comprising:
   - a base frame 2;
   - retaining means 6, 7 associated with the base frame 2 and adapted to retain a profiled element P having at least one area to be sealed 3 and a lateral surface 4 at least in part covered with a film S to be stripped;
   - sliding means 8, 9 adapted to move the retaining means 6, 7 between a mutual spacing configuration, in which the areas to be sealed 3 are mutually spaced apart, and a mutual approach configuration, in which the areas to be sealed 3 are mutually approached;
   - heat-sealing means with a heated plate 5 associated with the base frame 2 and adapted to seal one pair of profiled elements P;
- one step of mutual movement of the retaining means 6, 7 adapted to arrange the areas to be sealed 3 of each of the profiled elements P facing each other;
- one step of arrangement of the heat-sealing means with a heated plate 5 in contact with the areas to be sealed 3;
- one step of sealing the areas to be sealed 3.

The retaining means 6, 7 comprise a first supporting element 6 moveable along a first direction of sliding A and a second supporting element 7 mounted on the first supporting element 6 and moveable relative thereto along a second direction of sliding B substantially transverse to the first direction of sliding A.

In particular, the first supporting element 6 is adapted to receive in abutment a face of the profiled element P, while the second supporting element 7 is arranged on top of the first supporting element 6 and abutted on a face opposite to that abutted on the first supporting element 6.

The second supporting element 7 is suitably moved vertically along the second direction of sliding B to displace towards the first supporting element 6 and thus retain the profiled element P, arranged horizontally.

Each profiled element P is therefore placed between the first supporting element 6 and the second supporting element 7, with the respective head ending part protruding.

The head ending parts of the profiled elements P make up the areas to be sealed 3 and are for this reason facing one another.

The sliding means 8, 9 of the retaining means 6, 7 are placed between the base frame 2 and the retaining means themselves and are adapted to displace the profiled elements P between a mutual spacing position, in which the areas to be sealed 3 of two profiled elements P are facing one another and spaced apart from one another, and a mutual approach position, in which the heated areas to be sealed 3 are joined together.

In particular, the sliding means 8, 9 have, for each of the retaining means 6, 7, a sliding guide 8, extending horizontally orthogonally to the longitudinal extension of the profiled element P.

On the sliding guide 8 is mounted a carriage 9, which is locked together with the first supporting element 6 and is coupled to a movement system, not described in detail, adapted to displace both the carriages 9 of the retaining means 6, 7 in a reciprocal spacing/approach movement.

More in detail, the machinery 1 comprises a pair of retaining means 6, 7 and a pair of sliding means 8, 9.

Each of the sliding means 8, 9 is adapted to move one of the retaining means 6, 7 along a first direction of movement C and of the other of the retaining means 6, 7 along a second direction of movement D.

In the particular embodiment shown in the illustrations, the first direction of movement C and the second direction of movement D lie on a same substantially horizontal reference plane and are substantially orthogonal to each other.

The heat-sealing means with a heated plate 5 have a pair of sealing surfaces opposed to each other and arranged in contact with the areas to be sealed 3 in the step of arrangement.

Furthermore, the heat-sealing means with a heated plate 5 are arranged on a substantially vertical lying plane which is inclined by 45° with respect to the sliding guides 8 parallel to the areas to be sealed 3.

These heat-sealing means with a heated plate 5 are composed, e.g., of an electrical heating element with a substantially plate shape.

Usefully, the machinery 1 comprises at least one displacing assembly 10 which is adapted to displace the heat-sealing means with a heated plate 5 along a direction of displacement F between an active condition, wherein the heat-sealing means with a heated plate 5 are placed between the profiled elements P, and an inactive condition, wherein the heat-sealing means with a heated plate 5 are spaced away from the profiled elements P.

The machinery 1 is also provided with removal means 11, 12 to machine the areas to be sealed 3 before their heating.

The removal means 11, 12, for example, are composed of removal means by milling; however, alternative embodiments cannot be ruled out wherein the removal means are of a different type and involve, e.g., one or more hot tips, which remove the plastic material by melting, or one or more ultrasonic tips. The removal means 11, 12 comprise a holding frame 11 arranged on top of the retaining means 6, 7 and at least one machining tool 12 (a milling cutter) which can be positioned substantially facing the profiled elements P to machine their areas to be sealed 3.

The machining tool 12 is moveable between an idle condition, in which it is not placed between the profiled elements P, and a machining condition, in which it is placed between the profiled elements P.

In more detail, the removal means 11, 12 preferably comprise a pair of machining tools 12, each of which provided with a head which is active on the peripheral edge of a respective area to be sealed 3.

As shown in Figure 9, the machining tools 12 are arranged opposite each other and mounted on opposite sides of the holding frame 11 to work simultaneously on both profiled elements P.

The holding frame 11 is moveable both horizontally and vertically through a controlled axes system that allows the machining tools 12 to not only switch between the idle condition and the machining condition, but also to displace along the areas to be sealed 3 and perform the desired machining operation. The machinery 1 is also equipped with at least one containment presser 13 moveable along a transverse direction, both to the direction of movement of the profiled elements P and to the lying plane on which the profiled elements themselves lie, to abut on the areas to be sealed 3 during the coupling of the profiled elements P.

In particular, during the sealing step of the areas to be sealed 3, i.e., when they are brought into contact and pressed against each other, the containment presser 13 is used to contain the molten material of the profiled elements P.

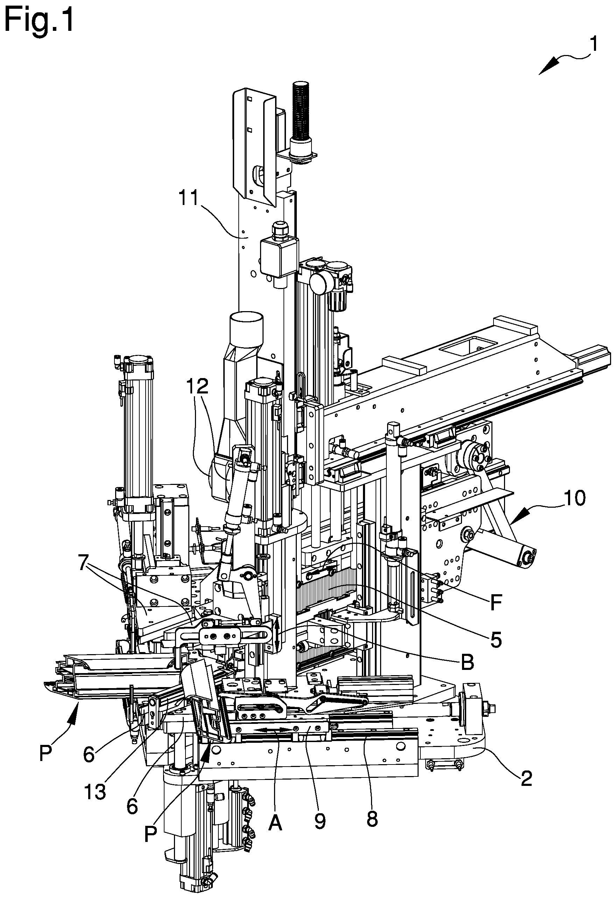

As can be seen in Figure 1, the machinery 1 is equipped with a containment presser 13, but it cannot be ruled out that two containment pressers 13 be arranged facing one another and both moveable in reciprocal approach to abut on opposite sides of the areas to be sealed 3.

The containment presser 13 is moveable vertically by means of a corresponding actuator device.

Advantageously, the process comprises a heat shrinking step of an ending portion 14 of each of the films S arranged at the respective area to be sealed 3, such a film S being made of a heat-shrink material.

Within the scope of the present treatise, by the term heat shrinking is meant a shrinking of the ending portion 14 of each of the films S which occurs following the heating of the areas to be sealed 3.

Usefully, the heat shrinking step takes place during the step of arrangement, i.e., when the profiled elements P move closer to the heat-sealing means with a heated plate 5 and the heat produced by the latter is exploited to shrink the films S.

Alternative embodiments cannot however be ruled out wherein the heat shrinking step is carried out separately from the step of arrangement and not by means of the heat-sealing means with a heated plate 5, e.g., by means of a dryer device, which blows hot air onto the films S, causing them to shrink, or by means of a different heating system.

In the embodiment shown in the illustrations, during the step of heat shrinking, the conformation of the film S is switchable between:
- an extended configuration, in which the film S adheres to the entire lateral surface 4 and the ending portion 14 is arranged at the area to be sealed 3; and
- a retracted configuration, in which, as a result of the approach to the heat-sealing means with a heated plate 5, the film S adheres to a portion of the lateral surface 4 and the ending portion 14 is moved away from the area to be sealed 3 along a direction of shrinkage G substantially parallel to the longitudinal axis of the profiled element P.

In other words, in the retracted configuration, only one portion of the film S remains adhering to the respective portion of the lateral surface 4 with which it is associated, while the ending portion 14, following the heating provided by the heat-sealing means with a heated plate 5, shrinks along the direction of shrinkage G, moving away and leaving the portion of the profiled element close to the area to be sealed 3 free.

Advantageously, therefore, in the retracted configuration the ending portion 14 is arranged moved away from the area to be sealed 3 in a disengagement position such as to allow a correct and easy execution of the sealing step of the areas to be sealed 3.

The process comprises a step of solidification subsequent to the step of sealing in which the areas to be sealed 3 are joined together and the film S is arranged in the retracted configuration.

In other words, following the step of solidification, the head surfaces of each profiled element P are associated with each other to define the frame of the window or door and the film S, arranged in the retracted configuration, does not cause an obstacle or an obstruction during the sealing step of the areas to be sealed 3.

It has in practice been ascertained that the described invention achieves the intended objects and, in particular, the fact is underlined that the covering of the lateral surfaces of the profiled elements by means of films in a shrink-wrap material makes it possible to simplify and facilitate the stripping operations of the profiled elements for the sealing of the relative areas to be sealed.

More in detail, such films are sensitive to the heat supplied by the heat-sealing means with a heated plate during the sealing of the areas to be sealed and by means of their heat-shrink properties the profiled elements are prevented from having to be stripped manually by an operator or by suitable automatic strippers before the sealing operations.

It therefore follows that the sealing operations of the profiled elements are considerably speeded up and made easier.

## Claims

1. A process for the sealing of plastic profiled elements, comprising:
- at least one step of supply of at least a machinery (1) for the sealing of plastic profiled elements comprising:
- at least a base frame (2);
- retaining means (6, 7) associated with said base frame (2) and adapted to retain at least one profiled element (P) having at least one area to be sealed (3) and a lateral surface (4) at least in part covered with a film (S) to be removed;
- sliding means (8, 9) adapted to move said retaining means (6, 7) between a mutual spacing configuration, in which said areas to be sealed (3) are mutually spaced apart, and a mutual approach configuration, in which said areas to be sealed (3) are mutually approached;
- heat-sealing means with a heated plate (5) associated with said base frame (2) and adapted to seal said pair of profiled elements (P);
- at least one step of mutual movement of said retaining means (6, 7) adapted to arrange the areas to be sealed (3) of each of said profiled elements (P) facing each other;
- at least one step of arrangement of said heat-sealing means with a heated plate (5) in contact with said areas to be sealed (3);
- at least one step of sealing said areas to be sealed (3);
**characterized by** the fact that it comprises at least a step of heat shrinking of at least an ending portion (14) of each of said films (S) arranged at the respective area to be sealed (3), said film (S) being made of a heat-shrink material.

2. The process according to claim 1, **characterized by** the fact that said step of heat shrinking takes place during said step of arrangement.

3. The process according to one or more of the preceding claims, **characterized by** the fact that, in said step of heat shrinking, the conformation of said film (S) is switchable between:
- an extended configuration, in which said film (S) adheres to said lateral surface (4) and said ending portion (14) is arranged at said area to be sealed (3); and
- a retracted configuration, in which, as a result of the approach to said heat-sealing means with a heated plate (5), said film (S) adheres to at least a portion of said lateral surface (4) and said ending portion (14) is moved away from said area to be sealed (3) along a direction of shrinkage (G) substantially parallel to the longitudinal axis of said profiled element (P).

4. The process according to one or more of the preceding claims, **characterized by** the fact that said retaining means (6, 7) comprise at least a first supporting element (6) movable along a first direction of sliding (A) and at least a second supporting element (7) mounted on said first supporting element (6) and movable relative thereto along a second direction of sliding (B) substantially transverse to said first direction of sliding (A).

5. The process according to one or more of the preceding claims, **characterized by** the fact that said machinery (1) comprises a pair of said retaining means (6, 7) and a pair of said sliding means (8, 9), said sliding means (8, 9) being adapted to move one of said retaining means (6, 7) along a first direction of movement (C) and of the other of said retaining means (6, 7) along a second direction of movement (D).

6. The process according to claim 5, **characterized by** the fact that said first direction of movement (C) and said second direction of movement (D) lie on a same substantially horizontal reference plane and are substantially orthogonal to each other.

7. The process according to one or more of the preceding claims, **characterized by** the fact that said heat-sealing means with a heated plate (5) have a pair of sealing surfaces opposed between them and arranged in contact with said areas to be sealed (3) in said step of arrangement.

8. The process according to one or more of the preceding claims, **characterized by** the fact that said heat-sealing means with a heated plate (5) are movable along a direction of displacement (F) lying on said reference plane and substantially transverse to said movement directions (C, D).

9. The process according to one or more of the preceding claims, **characterized by** the fact that it comprises a step of solidification subsequent to said step of sealing in which said areas to be sealed (3) are joined together and said film (S) is arranged in said retracted configuration.

## Patentansprüche

1. Verfahren zum Abdichten von Kunststoffprofilelementen, umfassend:
- mindestens einen Schritt der Lieferung von mindestens einer Maschine (1) zum Abdichten von Kunststoffprofilelementen, umfassend:
- mindestens einen Grundrahmen (2);
- Haltemittel (6, 7), die mit dem Grundrahmen (2) verbunden und geeignet sind, mindestens ein Profilelement (P) zu halten, das mindestens einen abzudichtenden Bereich (3) und eine Seitenfläche (4) aufweist, die mindestens teilweise mit einer zu entfernenden Folie (S) bedeckt ist;
- Gleitmittel (8, 9), die geeignet sind, die Haltemittel (6, 7) zu bewegen zwischen einer Konfiguration mit gegenseitigem Abstand, in der die abzudichtenden Bereiche (3) voneinander beabstandet sind, und einer Konfiguration mit gegenseitiger Annäherung, in der die abzudichtenden Bereiche (3) einander angenähert werden;
- Heißabdichtungsmittel mit einer beheizten Platte (5), die mit dem Grundrahmen (2) verbunden und zum Abdichten des Paares von Profilelementen (P) geeignet sind;
- mindestens einen Schritt der gegenseitigen Bewegung der Haltemittel (6, 7), der geeignet ist, die abzudichtenden Bereiche (3) jedes der Profilelemente (P) einander gegenüberliegend anzuordnen;
- mindestens einen Schritt der Anordnung der Heißabdichtungsmittel mit einer beheizten Platte (5) in Kontakt mit den abzudichtenden Bereichen (3);
- mindestens einen Schritt der Abdichtung der abzudichtenden Bereiche (3); **dadurch gekennzeichnet, dass** es mindestens einen Schritt des Wärmeschrumpfens mindestens eines Endabschnitts (14) jeder der Folien (S) umfasst, die in dem jeweiligen abzudichtenden Bereich (3) angeordnet sind, wobei die Folie (S) aus einem wärmeschrumpfenden Material hergestellt ist.

2. Verfahren nach Anspruch 1, **dadurch gekennzeichnet, dass** der Schritt des Wärmeschrumpfens während des Schritts der Anordnung stattfindet.

3. Verfahren nach einem oder mehreren der vorhergehenden Ansprüche, **dadurch gekennzeichnet, dass** in dem Schritt des Wärmeschrumpfens die Konformation der Folie (S) umschaltbar ist zwischen:
- einer verlängerten Konfiguration, in der der Film (S) an der Seitenfläche (4) haftet und der Endabschnitt (14) an dem abzudichtenden Bereich (3) angeordnet ist; und
- einer zurückgezogenen Konfiguration, in der als Ergebnis der Annäherung an die Heißabdichtungsmittel mit einer beheizten Platte (5) der Film (S) an mindestens einem Abschnitt der Seitenfläche (4) haftet und der Endabschnitt (14) von dem abzudichtenden Bereich (3) entlang einer Schrumpfrichtung (G) im Wesentlichen parallel zur Längsachse des Profilelements (P) wegbewegt wird.

4. Verfahren gemäß einem oder mehreren der vorhergehenden Ansprüche, **dadurch gekennzeichnet, dass** die Haltemittel (6, 7) mindestens ein erstes Stützelement (6) umfassen, das entlang einer ersten Gleitrichtung (A) beweglich ist, und mindestens ein zweites Stützelement (7), das auf dem ersten Stützelement (6) montiert ist und relativ dazu entlang einer zweiten Gleitrichtung (B) im Wesentlichen quer zur ersten Gleitrichtung (A) beweglich ist.

5. Verfahren nach einem oder mehreren der vorhergehenden Ansprüche, **dadurch gekennzeichnet, dass** die Maschine (1) ein Paar der Haltemittel (6, 7) und ein Paar der Gleitmittel (8, 9) umfasst, wobei die Gleitmittel (8, 9) dazu geeignet sind, eines der Haltemittel (6, 7) entlang einer ersten Bewegungsrichtung (C) und das andere der Haltemittel (6, 7) entlang einer zweiten Bewegungsrichtung (D) zu bewegen.

6. Verfahren nach Anspruch 5, **dadurch gekennzeichnet, dass** die erste Bewegungsrichtung (C) und die zweite Bewegungsrichtung (D) auf einer gleichen, im Wesentlichen horizontalen Bezugsebene liegen und im Wesentlichen orthogonal zueinander sind.

7. Verfahren nach einem oder mehreren der vorhergehenden Ansprüche, **dadurch gekennzeichnet, dass** die Heißabdichtungsmittel mit einer beheizten Platte (5) ein Paar von Dichtflächen aufweisen, die einander gegenüberliegen und in Kontakt mit den in diesem Anordnungsschritt abzudichtenden Bereichen (3) angeordnet sind.

8. Verfahren nach einem oder mehreren der vorstehenden Ansprüche, **dadurch gekennzeichnet, dass** die Heißabdichtungsmittel mit einer beheizten Platte (5) entlang einer Verschiebungsrichtung (F) beweglich sind, die auf der Bezugsebene und im Wesentlichen quer zu den Bewegungsrichtungen (C, D) liegt.

9. Verfahren nach einem oder mehreren der vorhergehenden Ansprüche, **dadurch gekennzeichnet, dass** es einen Schritt der Verfestigung im Anschluss an den Schritt des Abdichtens umfasst, bei dem die abzudichtenden Bereiche (3) miteinander verbunden werden und die Folie (S) in der zurückgezogenen Konfiguration angeordnet wird.

## Revendications

1. Procédé pour le scellage d'éléments profilés en plastique, comprenant :
- au moins une étape d'alimentation d'au moins une machine (1) pour le scellage d'éléments profilés en plastique comprenant :
- au moins un cadre de base (2) ;
- des moyens de retenue (6, 7) associés audit cadre de base (2) et adaptés pour retenir au moins un élément profilé (P) ayant au moins une zone à sceller (3) et une surface latérale (4) couverte au moins en partie d'un film (S) à enlever ;
- des moyens de coulissement (8, 9) adaptés pour déplacer lesdits moyens de retenue (6, 7) entre une configuration d'espacement mutuel, dans laquelle lesdites zones à sceller (3) sont mutuellement espacées, et une configuration de rapprochement mutuel, dans laquelle lesdites zones à sceller (3) sont mutuellement rapprochées ;
- des moyens de thermoscellage avec une plaque chauffée (5) associés audit cadre de base (2) et adaptés pour sceller ladite paire d'éléments profilés (P) ;
- au moins une étape de déplacement mutuel desdits moyens de retenue (6, 7) adaptée pour agencer les zones à sceller (3) de chacun desdits éléments profilés (P) en regard l'une de l'autre ;
- au moins une étape d'agencement desdits moyens de thermoscellage avec une plaque chauffée (5) en contact avec lesdites zones à sceller (3) ;
- au moins une étape de scellage desdites zones à sceller (3) ;
**caractérisé par le fait qu'**il comprend au moins une étape de thermorétraction d'au moins une portion de fin (14) de chacun desdits films (S) agencée au niveau de la zone à sceller (3) respective, ledit film (S) étant réalisé en un matériau thermorétractable.

2. Procédé selon la revendication 1, **caractérisé par le fait que** ladite étape de thermorétraction a lieu pendant ladite étape d'agencement.

3. Procédé selon une ou plusieurs des revendications précédentes, **caractérisé par le fait que**, à ladite étape de thermorétraction, la conformation dudit film (S) est permutable entre :
- une configuration étendue, dans laquelle ledit film (S) adhère à ladite surface latérale (4) et ladite portion de fin (14) est agencée au niveau de ladite zone à sceller (3) ; et
- une configuration rétractée, dans laquelle, en conséquence du rapprochement desdits moyens de scellage avec une plaque chauffée (5), ledit film (S) adhère à au moins une portion de ladite surface latérale (4) et ladite portion de fin (14) est éloignée de ladite zone à sceller (3) suivant une direction de retrait (G) sensiblement parallèle à l'axe longitudinal dudit élément profilé (P).

4. Procédé selon une ou plusieurs des revendications précédentes, **caractérisé par le fait que** lesdits moyens de retenue (6, 7) comprennent au moins un premier élément de support (6) mobile suivant une première direction de coulissement (A) et au moins un second élément de support (7) monté sur ledit premier élément de support (6) et mobile par rapport à celui-ci suivant une seconde direction de coulissement (B) sensiblement transversale à ladite première direction de coulissement (A).

5. Procédé selon une ou plusieurs des revendications précédentes, **caractérisé par le fait que** ladite machine (1) comprend une paire desdits moyens de retenue (6, 7) et une paire desdits moyens de coulissement (8, 9), lesdits moyens de coulissement (8, 9) étant adaptés pour déplacer l'un desdits moyens de retenue (6, 7) suivant une première direction de mouvement (C) et l'autre desdits moyens de retenue (6, 7) suivant une seconde direction de mouvement (D).

6. Procédé selon la revendication 5, **caractérisé par le fait que** ladite première direction de mouvement (C) et ladite seconde direction de mouvement (D) se trouvent sur un même plan de référence sensiblement horizontal et sont sensiblement orthogonales l'une à l'autre.

7. Procédé selon une ou plusieurs des revendications précédentes, **caractérisé par le fait que** lesdits moyens de thermoscellage avec une plaque chauffée (5) ont une paire de surfaces de scellage opposées entre eux et agencées en contact avec lesdites zones à sceller (3) à ladite étape d'agencement.

8. Procédé selon une ou plusieurs des revendications précédentes, **caractérisé par le fait que** lesdits moyens de thermoscellage avec une plaque chauffée (5) sont mobiles suivant une direction de déplacement (F) se trouvant sur ledit plan de référence et sensiblement transversale auxdites directions de mouvement (C, D).

9. Procédé selon une ou plusieurs des revendications précédentes, **caractérisé par le fait qu'**il comprend une étape de solidification ultérieure à ladite étape de scellage à laquelle lesdites zones à sceller (3) sont jointes et ledit film (S) est agencé dans ladite configuration rétractée.
